# EUROPÄISCHE PATENTANMELDUNG

(11) **EP 0 801 279 A2**
(43) Veröffentlichungstag der Anmeldung: **15.10.1997**
(21) Anmeldenummer: 97102267.8
(22) Anmeldetag: 13.02.1997
(51) Int. Cl.: F26B 11/04, F26B 23/02, F26B 25/00

(54) **Verfahren zum Trocknen einer Substanz**

(30) Priorität: 13.02.1996 DE 19605146
(71) Anmelder: Roediger Anlagenbau GmbH, D-63450 Hanau (DE)
(72) Erfinder: Effertz, Dietmar, Dipl.-Ing., D-63457 Hanau (DE); Mannert, Peter, Dipl.-Ing., D-60388 Frankfurt (DE); Dolderer, Peter, Dipl.-Ing., D-73432 Aalen (DE); Engert, Thomas, Dipl.-Ing., D-63457 Hanau (DE)
(74) Vertreter: Stoffregen, Hans-Herbert, Dr. Dipl.-Phys. Patentanwalt

(57) **Zusammenfassung**

Die Erfindung bezieht sich auf ein Verfahren zum Trocknen einer Substanz, insbesondere von Klärschlamm, mittels eines Trommeltrockners, wobei ein den Trommeltrockner (10) verlassendes Gas-Dampf-Gemisch teilweise in den Trommeltrockner zurückgeführt wird (Kreislaufstrom (22, 28) und teilweise, vorzugsweise nach Kühlung mittels Kondensator, abgeführt wird (Abgasstrom (24)). Um energetisch günstig zu fahren und um den Taupunkt des Abgasstroms möglich hoch einstellen zu können, wird vorgeschlagen, dass der Kreislaufstrom (22, 28) aus dem den Trommeltrockner verlassenden Gas-Dampf-Gemisch (20) vor dessen Entstaubung und/oder Kondensation abgeteilt wird, ohne dass das Gas-Dampf-Gemisch oder der Kreislaufstrom nach Verlassen des Trommeltrockners (10) entstaubt wird oder einen Kondensator (34) durchströmt.

## Beschreibung

Die Erfindung bezieht sich auf ein Verfahren zum Trocknen einer Substanz, insbesondere von Schlamm wie Klärschlamm mittels eines Trommeltrockners, wobei ein den Trommeltrockner verlassendes Gas-Dampf-Gemisch teilweise in den Trommeltrockner zurückgeführt (Kreislaufstrom) und teilweise, vorzugsweise nach Kühlung mittels eines Kondensators, abgeführt wird (Abgasstrom).

Ein derartiges Verfahren zum Trocknen einer Substanz ist der EP 0 457 203 B1 zu entnehmen. Bei diesem Verfahren wird das gesamte Gas-Dampf-Gemisch nach dem Verlassen des Trommeltrockners durch einen Staubabscheider geführt. Erst daran anschließend wird das Gas-Dampf-Gemisch in den Kreislaufstrom und den Abgasstrom aufgeteilt. Nachteilig ist, dass der Staubabscheider eine sehr große Durchsatzleistung haben muss, um das gesamte den Trockner verlassende Gas-Dampf-Gemisch - die Summe aus Abgasstrom und Kreislaufstrom - durchzusetzen. Dementsprechend aufwendig ist dieser Entstauber.

Der vorliegenden Erfindung liegt das Problem zu Grunde, ein Verfahren der eingangs genannten Art so weiterzubilden, dass die Entstaubung weniger aufwendig wird. Ferner soll der Abgasstrom möglichst gering gehalten werden und sein Taupunkt möglichst hoch sein.

Das Problem wird erfindungsgemäß im wesentlichen dadurch gelöst, dass der Kreislaufstrom aus dem den Trommeltrockner verlassenden Gas-Dampf-Gemisch vor dessen Entstaubung und/oder Kondensation von kondensierbaren Bestandteilen abgeteilt wird, und dass der Kreislaufstrom weder entstaubt wird noch einen Kondensator durchströmt.

Im Unterschied zum Stand der Technik durchläuft der Kreislaufstrom keine Einrichtung zum Entstauben. Überraschenderweise hat es sich nämlich herausgestellt, dass es nicht notwendig ist, den Kreislaufstrom zu entstauben. Somit muss nur der Abgasstrom entstaubt werden, falls das die Anforderungen an die Emission des Abgasstromes erforderlich machen. Nach der erfindungsgemäßen Lehre kann ein Staubfilter ganz entfallen oder der Durchsatz durch einen aus Emissionsgründen erforderlichen Staubfilter deutlich vermindert werden.

Anders ausgedrückt wird erfindungsgemäß vorgeschlagen, den Enstauber, falls erforderlich, nicht unmittelbar dem Trockner nachzuschalten, sondern in den Abgasstrom nach der Abtrennung des Kreislaufstromes zu integrieren.

Ferner wird erfindungsgemäß vorgeschlagen, dass nach dem Abteilen des Kreislaufstromes verbleibender Anteil des Gas-Dampf-Gemisches als der Abgasstrom über einen Entstauber und den Kondensator geführt wird. Hierbei dient der Kondensator zum Entfernen von Brüden und ggf. zum Auskoppeln von Wärme. Der Entstauber vermeidet den Eintrag von Staub in den Kondensator und verhindert damit, dass der Kondensator bzw. das Kondensat verunreinigt wird.

In Ausgestaltung der Erfindung wird vorgeschlagen, den Abgasstrom durch einen das Entstauben und Kondensieren von Bestandteilen des Abgasstromes bewirkenden Wäscher zu führen. Dadurch, dass allein der Abgasstrom entstaubt und gewaschen wird, ergibt sich die wirtschaftlich überaus vorteilhafte Möglichkeit, die Funktionen Entstauben, Waschen und Kondensieren in einer einzigen Verfahrensstufe zu integrieren. Einem derartigen Wäscher wird kühles Wasser zugeführt, das Staub bindet und Dampf auskondensiert, wobei sich das Wasser erwärmt. Die Wärme kann zu Heizzwecken genutzt werden, z. B. zum Beheizen von Faulbehältern auf Kläranlagen. Als Wäscher können z. B. Rieselfilter, Düsenwäscher oder Treibstrahlwäscher eingesetzt werden. Erforderlichenfalls wird dem Wäscher ein Tropfenabscheider nachgeschaltet.

Weiterhin kann der Abgasstrom nach Verlassen des Wäschers durch ein biologisch aktiviertes Filter geführt werden. Das biologisch aktivierte Filter dient zum Desodorieren des Abgasstromes und kann auch Schadstoffe und Reststaub entfernen. Biologisch aktivierte Filter, auch kurz Biofilter genannt, bestehen aus einer Schicht aus mit Mikroorganismen besiedeltem porösen Material, z. B. aus Kompost oder einem Gemisch aus Torf und Heidekraut, die von dem Abgasstrom durchströmt wird. Geruchsstoffe werden in der Schicht ad- oder absorbiert und von den Bakterien abgebaut.

Alternativ kann als Wäscher ein Biowäscher eingesetzt werden. In einem Biowäscher werden Geruchsstoffe in der Waschlösung absorbiert und dort von Mikroorganismen abgebaut. In der Regel werden Tropfkörper eingesetzt, auf deren Füllstoffen sich ein Biofilm bildet. Um die Temperatur der Waschlösung auf ein für die Mikroorganismen verträgliches Niveau von ca. 40 °C zu beschränken, kann dem Biowäscher ein konventioneller Wäscher oder einen Wärmetauscher zur Kühlung des Abgases und zur Auskoppelung von Wärme auf hohem Temperaturniveau vorgeschaltet werden.

Zum Kühlen des Abgasstromes vor dem Biofilter oder Biowäscher kann Umgebungsluft vor dem Filter oder Wäscher eingsaugt werden. Das ist insbesondere dann erforderlich, wenn der Sauerstoffgehalt des Abgasstromes zu gering ist, um im Biofilter oder -wäscher aerobe Verhältnisse sicherzustellen.

Alternativ kann als Wäscher ein Desintegrator eingesetzt werden. Ein Desintegrator umfasst einen schnellaufenden Rotor, in den Wasser eingespritzt wird. Üblicherweise besteht der Rotor aus einem oder mehreren Käfigen, die sich schnell und mit geringem Abstand an feststehenden Käfigen vorbeibewegen. Der Rotor zerschlägt das eingespritzte Wasser zu einem Nebel und erzeugt damit eine sehr große Wasseroberfläche. Ein Desintagrator ist zugleich zum Kondensieren und Staubabscheiden geeignet.

Der Desintegrator hat den besonderen Vorteil, dass dieser sehr kompakt ist und zugleich als Förderaggregat ausgebildet werden kann.

Dem Desintegrator kann ein Vorwäscher zum Abscheiden von Grobstaub oder ein Grobstaubabscheider, z. B. ein Tuchfilter, vorgeschaltet werden. Das in den Desintegrator eingespritzte und kondensierte Wasser wird aus dem Desingrator selbst und/oder über einen nachgeschalteten Tropfenabscheider abgetrennt. Es kann teilweise in den Wäscher oder Desintegrator zurückgeführt werden.

Es ist möglich, im Desintegrator den Taupunkt zu unterschreiten. Das aus dem Vorwäscher und Desintegrator abgeleitete Wasser ist allerdings mit Staubpartikeln verschmutzt, so dass seine Enthalpie nur unter Schwierigkeiten für Heizzwecke nutzbar ist.

Deshalb wird die Temparatur des Abgasstromes im Desintagrator vorzugsweise nur bis ungefähr zum Taupunkt, z. B. auf 65 °C bis 90 °C abgesenkt. In einem weiteren, dem Desintegrator nachgeschalteten Wäscher oder Wärmetauscher kann der gereinigte Abgasstrom unter Auskoppelung von Wärme weiter gekühlt und mit z. B. 30 °C bis 40 °C einem Biofilter zur Desodorierung zugeführt werden.

In weiterer Ausgestaltung der Erfindung wird der Kreislaufstrom unmittelbar in den Trommeltrockner zurückgeführt. Diese Variante ist besonders für direkt mit Rauchgas beaufschlagte Trockner günstig. Zum einen wird das Rauchgas durch Vermischen mit dem Kreislaufstrom gekühlt (gequencht), so dass zu hohe Temperaturen am Eingang der Trommel vermieden werden, zum anderen wird die Gasgeschwindigkeit in der Trommel des Trockners erhöht und damit der Wärmeübergang verbessert. Außerdem wird hierdurch die Einsatzmöglichkeit einfacher einzügiger Trommeltrockner erweitert, weil auch bei großen Trommelquerschnitten hohe Gasgeschwindigkeiten eingestellt werden können.

Vorzugsweise kann der Kreislaufstrom variabel eingestellt werden. Während ein Gebläse im Abgasstrom einen Unterdruck im Trockner erzeugt, um zu verhindern, dass Gas-Dampf-Gemisch über Undichtheiten aus dem Trockner austritt, und eine ungefähr konstante Durchsatzleistung hat, kann ein Gebläse im Kreislaufstrom eine veränderbare Durchsatzleistung haben.

Nach einer besonderen eigenerfinderischen Variante wird zumindest ein Teil des Kreislaufstromes in eine Brennkammer geleitet, deren Rauchgase in den Trommeltrockner geführt werden. Bei diesem Verfahren der direkten Trocknung mit heißem Rauchgas wird das Rauchgas bereits in der Brennkammer durch Vermischen mit dem Kreislaufstrom gequencht. Die Temperatur in der Brennkammer wird vermindert, ohne dass es erforderlich ist, Verbrennungsluft in weit überstöchiometrischem Verhältnis zuzuführen. Dadurch werden mehrere Vorteile erreicht: Zum einen wird die Überschussluftmenge und damit die Abgasmenge vermindert und dadurch der thermische Wirkungsgrad der Anlage verbessert; zum anderen wird wegen des geringeren Luftanteils der Taupunkt des Gas-Dampf-Gemisches erhöht, so dass aus dem Abgasstrom Wärme mit einem höheren Temperaturniveau ausgekoppelt werden kann. Der Taupunkt ist abhängig vom Dampfpartialdruck, also vom Dampf-/Gas-Verhältnis, das bestimmt wird durch die Verdampfungsleistung des Trockners und die Ströme der in den im Unterdruck betriebenen Trockner eindringenden Falschluft, der Überschussluft bei der Verbrennung und des Rauchgases.

Des Weiteren wird erfindungsgemäß vorgeschlagen, dass die Temperatur der von der Brennkammer in den Trommeltrockner geführten Rauchgase durch Veränderung des Kreislaufstromes geregelt wird, vorzugsweise auf eine Temperatur, die weniger als 800 °C beträgt. Die Temperatur in dem Trockner soll begrenzt werden, um den Trockner aus beschränkt temperaturbeständigen Materialien wie üblichen Stahlsorten herstellen zu können.

Nach einer besonders bevorzugten Ausführungsform der Erfindung wird der Brennkammer Verbrennungsluft und Brennstoff in einem stöchiometrischen Verhältnis (Lambda-Wert) zwischen 1 und 1,5, vorzugsweise zwischen 1,05 und 1,2 zugeführt. Bei einem Lambda-Wert von etwa 1 ist nicht nur der Wirkungsgrad optimal und der Taupunkt maximal, es werden auch zugleich geringe Werte für die Schadstoffe Kohlenmonoxid und Stickoxid erreicht. Die Regelung der Verbrennungsluftzufuhr kann über eine Lambda-Sonde erfolgen. Bei nur geringfügig überstöchiometrischer Verbrennung gelangt wenig Sauerstoff in den Trockner, so dass Brand- und Explosionsgefahren vermindert werden.

Nach einer anderen Ausführungsform wird zumindest ein Teil des Kreislaufstromes vor Zurückführung in den Trommeltrockner vorzugsweise über einen Wärmetauscher erwärmt. Diese Variante ist besonders für indirekt mit Rauchgas beheizte Trommeltrockner geeignet, bei denen der Kreislaufstrom über den Wärmetauscher vom Rauchgas aus der Brennkammer beheizt wird.

Ferner wird vorgeschlagen, den Abgasstrom zumindest teilweise einer Brennkammer zuzuführen. In der Brennkammer werden im Abgas enthaltene organische Stoffe verbrannt. Das Abgas strömt mit dem Rauchgas vermischt durch den Wärmetauscher, mittels dessen der Kreislaufstrom aufgeheizt wird, und dann in die Umgebung. Durch die Zuführung des Abgasstromes in die Brennkammer wird das Rauchgas gekühlt.

In weiterer Ausgestaltung der Erfindung wird der Kreislauf- oder Abgasstrom entlang von Wandungen der Brennkammer geführt, so dass dieser die Brennkammerwandung kühlt. Bei einer stöchiometrischen Verbrennung von Öl, Faulgas oder Erdgas können aber sehr hohe Temperaturen von über 1500 °C erreicht werden, denen die Brennkammerwandung normalerweise nicht standhalten kann. Um die Brennkammerwandung zu schützen, wird kühles Gas-Dampf-Gemisch vorzugsweise zwischen Flamme und Wandung eingeleitet. Es ist auch möglich, das Gas-Dampf-Gemisch außen an der Wandung entlangzuführen, bevor es in die Brennkammer geführt wird.

Nach einer besonders bevorzugten Ausführungsform wird die zu trocknende Substanz wie z. B. Klärschlamm durch den Trommeltrockner mittels mechanisch wirkender Einbauten gefördert, wobei die getrocknete Substanz und das Gas-Dampf-Gemisch über getrennte Auslässe aus dem Trommeltrockner abgeführt werden. Bei den mechanischen Einbauten kann es sich um innen am Trommelumfang angeordnete Schaufeln handeln, die die Substanz bei der Drehung der Trommel heben, durch das in der Trommel strömende Gas-Dampf-Gemisch herabfallen lassen sowie zugleich axial durch die Trommel schieben.

Eine Reihe anderer gleichwirkender Einbauten ist denkbar, wie z. B. die Anordnung wendelförmiger Bleche oder Pflugscharen.

Im Vergleich zu einer pneumatischen Förderung durch sehr hohe Geschwindigkeiten des Gas-Dampf-Gemisches wird bei einer mechanischen Förderung wenig Staub erzeugt. Die getrocknete Substanz und das Gas-Dampf-Gemisch werden bereits im Trockner voneinander getrennt und getrennt ausgetragen; grober Staub wird nicht vom Gas-Dampf-Gemisch mitgerissen. Je weniger Staub im Gas-Dampf-Gemisch enthalten ist, desto geringer ist die Gefahr, dass es zu Anbackungen durch im Kreislaufstrom enthaltenen Staub kommt. Bei geringem Staubanteil im Abgasstrom wird es außerdem möglich, auf einen besonderen Staubfilter im Abgasstrom zu verzichten und die geringen Staubmengen in einem Wäscher abzutrennen.

Die Erfindung bezieht sich außerdem auf ein Verfahren zum Trocknen einer Substanz, insbesondere von Klärschlamm, mittels eines Trommeltrockners, wobei mittels mechanisch wirkender Miittel Substanz von einem Zufuhrort zu einem Abfuhrort gefördert wird und der Trommeltrockner zumindest erste und zweite Auslässe für einerseits getrocknete Substanz und andererseits ein den Trommeltrockner verlassendes Gas-Dampf-Gemisch aufweist. Derartige Trommeltrockner sind bereits im Einsatz und erzeugen ein nur mäßig staubbeladenes Gas-Dampf-Gemisch.

Nach der Lehre der Erfindung wird das Gas-Dampf-Gemisch zumindest teilweise ohne vorherige Entstaubung in den Trommeltrockner zurückgeführt. Vorzugsweise erfolgt auch keine Kondensation des Kreislaufstromes, um den Taupunkt des Gas-Dampf-Gemisches möglichst hoch zu halten.

In weiterer Ausgestaltung der Erfindung wird im Kreislauf geführter Anteil des Gas-Dampf-Gemisches vor Rückführung in den Trommeltrockner vorzugsweise mittels eines Wärmetauschers und/oder einer Brennkammer erwärmt. Der Kreislaufstrom wird bei einer indirekten Trocknung über den Wärmetauscher und bei einer direkten Trocknung durch Vermischen mit Rauchgas aus einer Brennkammer beheizt, wobei der Kreislaufstrom auch durch die Brennkammer geleitet werden kann.

Weitere Einzelheiten, Vorteile und Merkmale ergeben sich nicht nur aus den Ansprüchen, den diesen zu entnehmenden Merkmalen - für sich oder in Kombination -, sondern auch aus der nachfolgenden Beschreibung von bevorzugten Ausführungsbeispielen anhand der Zeichnungen.

Es zeigen
- Fig. 1: ein Schema einer Trocknungsanlage mit direkter Beheizung des Trommeltrockners,
- Fig. 2: ein Schema einer Trocknungsanlage mit indirekter Beheizung des Trommeltrockners und
- Fig. 3: einen Schnitt durch eine Brennkammer.

In den Figuren sind gleichartige Komponenten mit identischen Bezugszeichen versehen.

Um eine Substanz 12 wie Klärschlamm zu trocknen, wird ein prinzipiell bekannter Trommeltrocker 10 benutzt. Dabei wird dem Trommeltrockner 10 eingangsseitig die zu trocknende Substanz 12, z.B. entwässerter Klärschlamm, und Rauchgas über eine Leitung 14 aus einer Brennkammer 16 zugeführt. Es handelt sich folglich um eine Anlage, bei der der Trommeltrockner 10 direkt mit Rauchgas beaufschlag wird. Ausgangsseitig wird getrocknete Substanz 18 und ein Gas-Dampf-Gemisch 20 abgeführt. Das Gas-Dampf-Gemisch 20 wird in einen Kreislaufstrom 22 und einen Abgasstrom 24 aufgeteilt. Der Kreislaufstrom 22 wird mittels eines Gebläses 26 mittelbar über eine Leitung 28 und die Brennkammer 16 oder unmittelbar über eine Leitung 29 zur Trockentrommel 10 zurückgeführt und in diese eingangsseitig eingeleitet, vorzugsweise vermischt mit dem Rauchgas (Leitung 14).

Der Abgasstrom 24 wird über ein Saugzuggebläse 32 nach außen abgeführt, nachdem dieser in einem Wäscher 34 entstaubt und kondensiert worden ist. Das Saugzuggebläse 32 erzeugt einen Unterdruck im Trommeltrockner 10. Dem Wäscher 34 wird Kühlwasser 36 zugeführt. Warmwasser 38, das sich aus dem Kühlwasser und Kondensat zusammensetzt, wird aus dem Wäscher 34 abgeführt und kann für Heizzwecke verwendet werden.

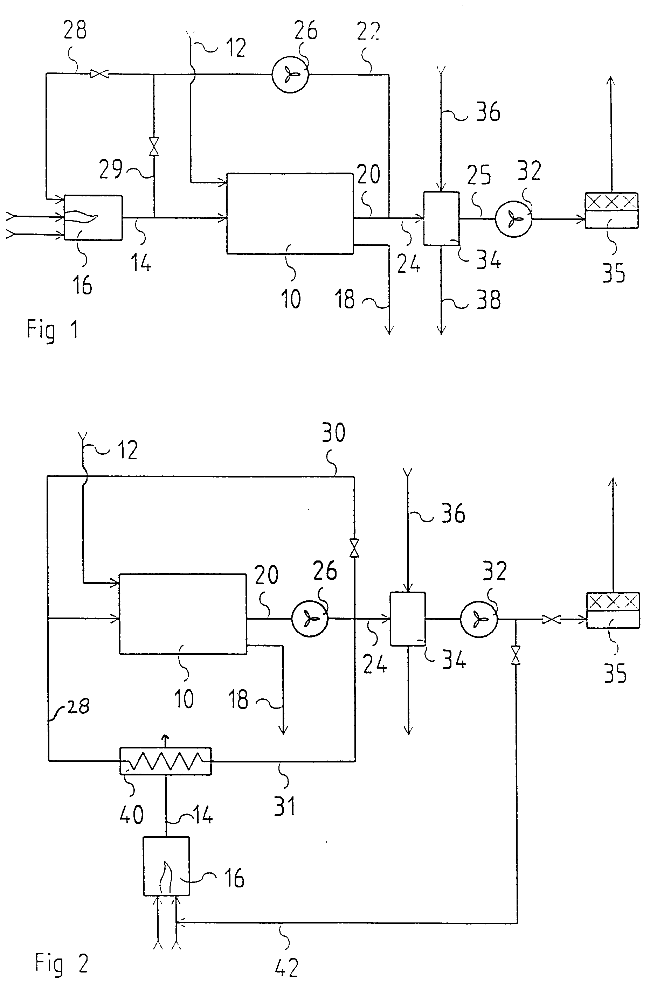

Bei einer der Fig. 2 zu entnehmenden Anlage gelangt ein indirekt beheizter Trommeltrockner 10 zum Einsatz. Dem Trommeltrockner 10 werden eingangsseitig die Kreislaufströme 28 und/oder 31 zugeführt, die unmittelbar in den Trockner 10 (Leitung 30) oder mittelbar über einen Wärmetauscher 40 und eine Leitung 31 in diesem münden. Das in der Brennkammer 16 erzeugte Rauchgas erwärmt über den Wärmetauscher 40 den Kreislaufstrom 28 und wird nach außen abgeführt. Der Abgasstrom 24 wird über den Wäscher 34 geführt und entweder nach außen abgeleitet oder über eine Rückführung 42 der Brennkammer 16 zugeführt, so dass die Brennkammer 16 zugleich zum Nachverbrennen des Abgasstromes 42 dient. Abgas 42 und Rauchgas 14 werden gemeinsam nach außen abgeführt.

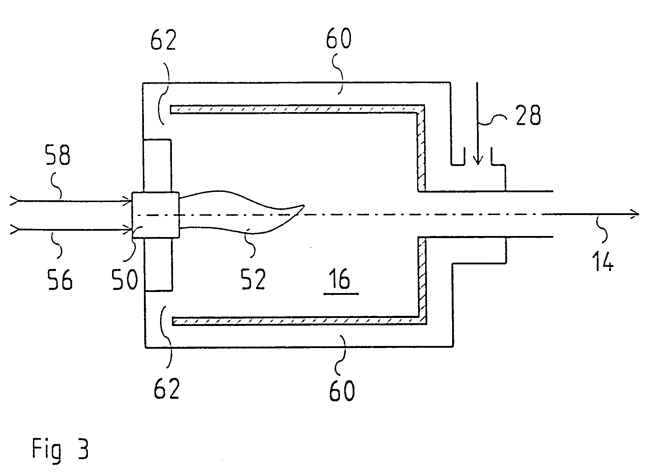

Fig. 3 zeigt eine Brennkammer 16 mit einem Brenner 50, einer Flamme 52 und einer Brennkammerwandung 54. Dem Brenner 50 wird Brennstoff 56, z.B. Faulgas, Erdgas oder Öl, sowie Verbrennungsluft 58 vorzugsweise in stöchiometrischem Verhältnis zugeführt. Die Brennkammer 16 ist von einem Ringspalt 60 umgeben, durch den der Kreislaufstrom 28 geführt wird, um die Brennkammerwandung 54 von außen zu kühlen. Der Kreislaufstrom 28 wird aus dem Ringspalt 60 über brennerseitige Öffnungen 62 in die Brennkammer 16 eingeleitet. Die Öffnungen 62 sind so angeordnet, daß der eingeleitete Kreislaufstrom innen an der Brennkammerwandung 54 entlangströmt und sich zwischen diese und die Flamme 52 legt, so daß die Brennkammerwandung 54 vor direkter Flammenberührung geschützt wird. Das die Brennkammer verlassende Rauchgas 14 ist mit dem Kreislaufstrom vermischt und dementsprechend gekühlt.

Ein Bemessungsbeispiel soll die Vorteile des erfindungsgemäßen Verfahrens illustrieren. Es werden zwei Fälle gegenübergestellt, die sich beide auf einen direkt mit Rauchgas beheizten Trommeltrockner beziehen, wie in Fig. 1 dargestellt. Es wird jeweils eine Verdampfungsleistung von 1000 kg/h angesetzt.

Im ersten Fall werden ca. 88 Nm³/h Erdgas mit einem unteren Heizwert von 35 MJ/kg in der Brennkammer 16 verbrannt und Verbrennungsluft überstöchiometrisch mit einem Lambda-Wert von 3,1 zugeführt. Der Massenstrom des Rauchgases 14 beträgt ca. 3400 kg/h. Die Rauchgastemperatur beim Verlassen der Brennkammer liegt bei ungefähr 800°C. Anschließend wird das Rauchgas mit einem Kreislaufstrom 22, 29 von ca. 800 kg/h mit 110°C vermischt, so dass die Temperatur des Gemisches beim Eintritt in den Trommeltrockner 10 ca. 600°C beträgt. Der Massenstrom des den Trommeltrockner 10 verlassenden Gas-Dampf-Gemisches 20 beträgt unter der Annahme, daß 100 kg/h Falschluft in den Trommeltrockner eingesaugt werden, ca. 5300 kg/h mit einer Temperatur von ca. 110°C. Nach der Abtrennung des Kreislaufstroms 22 verbleiben als Abgasstrom 24 ca. 4500 kg/h, wovon ca. 1200 kg/h Wasserdampf sind. Das entspricht einem molaren Anteil von ca. 37% und damit einem Wasserdampfpartialdruck von ca. 370 mbar (der Druck liegt nur geringfügig unter dem Umgebungsdruck). Der Taupunkt beträgt ca. 73°C. Nach dem Kondensator 34, in dem der Abgasstrom auf eine Temperatur von 35°C gekühlt wird, verbleibt ein Restabgasstrom 25 von ca. 3430 kg/h, der durch den Biofilter 35 geführt wird. Die Sauerstoffkonzentration zum Biofilter 35 beträgt ca. 14 Vol%.

Die Energiebilanz ergibt einen Eintrag von 3080 MJ/h, eine Wasserverdampfungsenthalpie von ca. 2600 MJ/h, eine Enthalpie im trockenen Abgasstrom von ca. 370 MJ/h und einen Rest von ca. 110 MJ/h für Verluste.

Im zweiten Fall werden 80 Nm³/h Erdgas in der Brennkammer 16 mit einem Lambda-Wert von 1,15 verbrannt. In die Brennkammer wird der Kreislaufstrom 22, 28 geführt mit einem Durchsatz von ca. 2600 kg/h. Der Rauchgasstrom 14 mit ca. 3765 kg/h hat eine Temperatur von ca. 600°C und wird in den Trommeltrockner 10 gesaugt. Das aus dem Trommeltrockner abgesaugte Gas-Dampf-Gemisch 20 hat einen Massenstrom von ca. 4865 kg/h und eine Temperatur von ca. 110°C. Nach dem Abtrennen des Kreislaufstromes 22 verbleibt der Abgasstrom 24 von ca. 2265 kg/h, wovon ca. 1130 kg/h Wasserdampf sind, was einem Molanteil von 62%, einem Wasserdampfpartialdruck von 620 mbar und einem Taupunkt von etwa 87°C entspricht. Nach dem Kondensator 34 verbleibt ein Restabgasstrom 25 von ca. 1180 kg/h bei 35°C mit einem Sauerstoffanteil von ca. 4,4 Vol%. Um einen Sauerstoffgehalt von 10 Vol% einzustellen, werden 600 kg/h Außenluft beigemischt, so dass der Durchsatz durch den Biofilter 35 ca. 1780 kg/h beträgt. Von der eingebrachten Energie von 2800 MJ/h dienen 2600 MJ/h zum Verdampfen des Wassers, im trockenen Abgasstrom 24 sind 127 MJ/h Wärme enthalten und der Rest von 73 MJ/h sind Wärmeverluste.

## Patentansprüche

1. Verfahren zum Trocknen einer Substanz, insbesondere von Schlamm wie Klarschlamm, mittels eines Trommeltrockners, wobei ein den Trommeltrockner (10) verlassendes Gas-Dampf-Gemisch teilweise in den Trommeltrockner zurückgeführt (Kreislaufstrom (22, 28, 30, 31)) und teilweise, vorzugsweise nach Kühlung mittels Kondensator (34), abgeführt wird (Abgasstrom (24)),
**dadurch gekennzeichnet**,
dass der Kreislaufstrom (22, 28, 30, 31) aus dem den Trommeltrockner (10) verlassenden Gas-Dampf-Gemisch (20) vor dessen Entstaubung und/oder Kondensation von kondensierbaren Bestandteilen abgeteilt wird und dass der Kreislaufstrom nach Verlassen des Trommeltrockners weder entstaubt wird noch einen Kondensator (34) durchströmt.

2. Verfahren nach Anspruch 1,
**dadurch gekennzeichnet**,
dass nach dem Abteilen des Kreislaufstromes (22, 28, 30, 31) verbleibender Anteil des Gas-Dampf-Gemisches (20) als der Abgasstrom (24) über einen Entstauber und den Kondensator (34) geführt wird.

3. Verfahren nach zumindest Anspruch 2,
**dadurch gekennzeichnet**,
dass der Abgasstrom (24) durch einen das Entstauben und Kondensieren von Bestandteilen des Abgasstromes bewirkenden Wäscher (34) geführt wird und vorzugsweise nach Verlassen des Wäschers (34) wie Biowäschers oder Desintegrators durch einen biologisch aktivierten Filter (35) geführt wird.

4. Verfahren nach zumindest Anspruch 2,
**dadurch gekennzeichnet**,
dass der Abgasstrom (24) vorzugsweise nach einer Desodorierung nach aussen geführt wird.

5. Verfahren nach zumindest Anspruch 1,
**dadurch gekennzeichnet**,
dass der Kreislaufstrom (22, 30) unmittelbar in den Trommeltrockner (10) zurückgeführt wird.

6. Verfahren nach zumindest Anspruch 1,
**dadurch gekennzeichnet**,
dass zumindest ein Teil (31) des Kreislaufstromes vor Zurückführung in den Trommeltrockner (10) vorzugsweise über einen Wärmetauscher (40) erwärmt wird und/oder dass zumindest ein Teil (28) des Kreislaufstromes (22) in eine Brennkammer (16) geleitet wird, deren Rauchgase (14) in den Trommeltrockner (10) geführt werden.

7. Verfahren nach zumindest Anspruch 6,
**dadurch gekennzeichnet**,
dass die Temperatur der von der Brennkammer (16) in den Trommeltrockner (10) geführten Rauchgase (14) durch Veränderung des Kreislaufstromes (28) geregelt wird, vorzugsweise auf eine Temperatur unter 1000 °C, und dass vorzugsweise der Brennkammer Verbrennungsluft (58) und Brennstoff (56) in einem stöchiometrischen Verhältnis zwischen 0,99 und 1,5, vorzugsweise zwischen 1 und 1,1 zugeführt werden.

8. Verfahren nach zumindest Anspruch 1,
**dadurch gekennzeichnet**,
dass zumindest ein Teil (42) des Abgasstromes (24) einer Brennkammer zugeführt wird, wobei vorzugsweise der Kreislaufstrom (28) oder Abgasstrom (42) an Wandungen (54) der Brennkammer (16) entlanggeführt wird.

9. Verfahren nach zumindest einem der vorhergehenden Ansprüche,
**dadurch gekennzeichnet**,
dass die zu trocknende Substanz (12) durch den Trommeltrockner (10) mittels mechanisch wirkender Einbauten gefördert wird, wobei die getrocknete Substanz und das Gas-Dampf-Gemisch über getrennte Auslässe (18,20) aus dem Trommeltrockner (10) abgeführt werden.

10. Verfahren zum Trocknen einer Substanz, insbesondere von Schlamm wie Klärschlamm, mittels eines Trommeltrockners (10), wobei mittels mechanisch wirkender Mittel Substanz von einem Zufuhrort (12) zu einem Abfuhrort (18) gefördert wird und der Trommeltrockner (10) zumindest erste und zweite Auslässe für einerseits getrocknete Substanz und andererseits ein den Trommeltrockner verlassendes Gas-Dampf-Gemisch (20) aufweist,
**dadurch gekennzeichnet**,
dass das Gas-Dampf-Gemisch (20) zumindest teilweise ohne vorherige Entstaubung in den Trommeltrockner (10) zurückgeführt wird.

11. Verfahren nach Anspruch 10,
**dadurch gekennzeichnet**,
dass im Kreislauf (22, 28, 31) geführter Anteil des Gas-Dampf-Gemisches (20) vor Rückführung in den Trommeltrockner (10) vorzugsweise mittels eines Wärmetauschers (40) und/oder einer Brennkammer (14) erwärmt wird.
